(19) Europäisches Patentamt
European Patent Office
Office européen des brevets

(11) **EP 3 271 230 B1**

(12) **FASCICULE DE BREVET EUROPEEN**

(45) Date de publication et mention de la délivrance du brevet:
**30.10.2019 Bulletin 2019/44**

(21) Numéro de dépôt: **16713521.9**

(22) Date de dépôt: **19.02.2016**

(51) Int Cl.:
*B60W 10/06* <sup>(2006.01)</sup>  *B60W 10/08* <sup>(2006.01)</sup>
*B60W 10/26* <sup>(2006.01)</sup>  *B60W 20/00* <sup>(2016.01)</sup>
*B60K 6/28* <sup>(2007.10)</sup>  *B60W 50/00* <sup>(2006.01)</sup>

(86) Numéro de dépôt international:
**PCT/FR2016/050397**

(87) Numéro de publication internationale:
**WO 2016/146911 (22.09.2016 Gazette 2016/38)**

(54) **PROCÉDÉ ET DISPOSITIF DE GESTION DE L'ÉNERGIE D'UN VÉHICULE AUTOMOBILE HYBRIDE**

VERFAHREN UND VORRICHTUNG ZUR VERWALTUNG DER ENERGIE EINES HYBRIDMOTORFAHRZEUGS

METHOD AND DEVICE FOR MANAGING THE ENERGY OF A HYBRID MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2015 FR 1552174**

(43) Date de publication de la demande:
**24.01.2018 Bulletin 2018/04**

(73) Titulaire: **Renault S.A.S.**
**92100 Boulogne-Billancourt (FR)**

(72) Inventeurs:
- **MIRO-PADOVANI, Thomas**
  **78310 Maurepas (FR)**
- **KETFI-CHERIF, Ahmed**
  **78990 Elancourt (FR)**
- **COLIN, Guillaume**
  **45160 Olivet (FR)**
- **CHAMAILLARD, Yann**
  **45130 Le Bardon (FR)**

(56) Documents cités:
CN-A- 104 002 804    US-A1- 2003 107 352
US-A1- 2004 178 756

EP 3 271 230 B1

**Description**

La présente invention se rapporte à un procédé et à un dispositif de gestion de l'énergie, par exemple de l'énergie de traction et/ou de propulsion, d'un véhicule automobile hybride.

Dans le domaine des véhicules automobiles hybrides, le groupe motopropulseur, aussi connu par son abréviation GMP, comprend un moteur thermique alimenté par un réservoir de carburant et au moins une machine électrique alimentée par un accumulateur électrique haute tension, par exemple une batterie ou un ensemble de supercondensateurs, aussi appelé pack de supercondensateurs.

Le groupe motopropulseur comprend aussi un calculateur mettant en œuvre une loi de gestion d'énergie, aussi connue sous l'abréviation de LGE, permettant de gérer le fonctionnement conjoint de l'accumulateur électrique haute-tension et du moteur thermique, en fonction notamment du niveau d'énergie de l'accumulateur électrique haute-tension, aussi connu sous le terme anglophone de State of Energy, ou plus communément sous son abréviation SoE.

On connait notamment du document FR2988674, déposé par la demanderesse, un procédé et un dispositif de commande d'un facteur énergétique d'équivalence, permettant d'adapter la consommation énergétique de la machine électrique et du moteur thermique. Le procédé décrit consiste à minimiser la somme de la consommation d'énergie issue du moteur thermique et de la consommation d'énergie électrique en pondérant la consommation d'énergie électrique par un facteur d'équivalence, évalué en fonction, entre autre, du SoE de l'accumulateur haute tension et en fonction des conditions de roulage du véhicule automobile hybride.

Les véhicules automobiles hybrides comprennent, en outre, une batterie pour alimenter un circuit électrique secondaire fonctionnant à une tension de 14V, connu sous le nom de réseau électrique de bord ou aussi réseau 14V, et permettant d'alimenter, en autre, les dispositifs d'assistance, de sécurité et les calculateurs du véhicule automobile. De manière conventionnelle, la batterie d'alimentation du réseau 14V fonctionne en régulation de tension, indépendamment de la régulation des accumulateurs haute tension.

Aussi, la consommation énergétique globale des véhicules automobiles hybrides n'est pas optimisée.

C'est pourquoi il existe un besoin pour optimiser la gestion de l'énergie des véhicules automobiles hybrides.

Le document US 2004/178756 A1 divulgue un procédé de prédiction du couple et de la puissance disponibles dans un moteur de traction alimenté par une batterie, mais qui ne surmonte pas les inconvénients précités.

On propose un procédé de gestion de l'énergie d'un véhicule automobile hybride entrainé par une machine électrique, par exemple une machine à reluctance, par exemple une machine à flux axial, une machine à flux radial, ou tout autre type de machine électrique adaptée, et un moteur thermique, par exemple un moteur thermique à essence, un moteur thermique diesel ou tout autre type de moteur thermique adapté, le véhicule automobile comprenant un réseau électrique de bord, un ensemble d'alimentation électrique adapté pour alimenter le réseau électrique de bord et la machine électrique, l'ensemble d'alimentation comprenant deux accumulateurs électriques en série, par exemple des batteries, des supercondensateurs, par exemple des supercapacités, ou tout autre type d'accumulateurs adaptés, par exemple de type li-ion, au plomb ou tout autre type adapté, et des moyens de régulation pour réguler, pour chaque accumulateur parmi les deux accumulateurs électriques, une valeur de puissance fournie ou reçue, le procédé comprenant des étapes consistant à :

- déterminer un domaine de couples de valeurs admissibles de commande des moyens de régulation, par exemple un domaine bidimensionnel de valeurs de puissance, de tension ou de courant, en fonction d'au moins un paramètre de fonctionnement de l'ensemble d'alimentation électrique, par exemple en fonction d'une valeur de tension, d'une valeur de courant, d'une valeur de puissance, ou tout autre type de valeur adaptée, par exemple une valeur minimale, une valeur de référence, ou une valeur maximale de fonctionnement d'au moins un accumulateur parmi les deux accumulateurs électriques, par exemple en fonction d'une valeur minimale, d'une valeur de référence ou d'une valeur maximale des moyens de régulation, par exemple des valeurs minimales et/ou maximales prédéfinies, ou par exemple en fonction de paramètres de fonctionnement comme par exemple la température, la durée de fonctionnement, ou tout autre paramètre de régulation des valeurs minimales et/ou maximales,
- sélectionner dans le domaine de couples de valeurs admissibles de commande, un couple de valeurs de commande correspondant à un minimum de consommation électrique et du moteur thermique du véhicule automobile,
- transmettre vers les moyens de régulation des signaux de commande élaborés à partir du couple de valeurs de commande sélectionné.

De cette manière, on inclut l'optimisation de l'énergie de la batterie d'alimentation du réseau 14V dans une loi de gestion d'énergie globale du groupe motopropulseur. On aboutit ainsi, à une stratégie qui offre l'avantage de proposer une approche optimale globalement, et non plus localement sur la batterie de traction haute-tension seule.

Ainsi, on peut optimiser le fonctionnement de l'ensemble d'alimentation électrique du véhicule automobile.

De cette manière, on peut réguler les accumulateurs électriques de manière relativement optimisée.

Ainsi, lors de l'étape de détermination du domaine de couples de valeurs admissibles de commande, on limite pour la ou les étapes suivantes, le choix des couples de valeurs de commande à un domaine de couples admissibles par l'ensemble d'alimentation électrique, de manière à assurer son fonctionnement, par exemple en évitant des valeurs de commande risquant de le détériorer, ou des valeurs inadaptées, par exemples trop faibles, risquant de produire un fonctionnement non souhaité. Autrement dit, on exclut du domaine de valeurs admissibles, tous les couples de valeurs de commande non adaptées au fonctionnement de l'ensemble d'alimentation électrique.

On peut, par la mise en œuvre de ce procédé, optimiser le fonctionnement conjoint de la machine électrique et du réseau électrique de bord, en réalisant une gestion commune des deux accumulateurs en série alimentant conjointement la machine électrique et le réseau électrique de bord.

On peut, en particulier, déterminer de manière relativement rapide un couple de valeurs de commande optimal adaptés pour commander les moyens de régulation afin d'assurer un fonctionnement optimal du réseau électrique de bord et de la machine électrique.

En particulier, on peut, par ce procédé, mutualiser les accumulateurs électriques pour assurer l'alimentation de la machine électrique et du réseau de bord, et mutualiser les calculs nécessaires à la commande des moyens de régulation.

De cette manière, on peut gérer de manière relativement simple et rapide l'énergie du véhicule automobile hybride.

Le couple de valeurs de commande peut par exemple comprendre des valeurs de commande en tension, en courant, en puissance ou tout autre type de valeur de commande adapté.

Avantageusement et de manière non limitative, l'étape de sélection peut comprendre pour chaque couple de valeurs candidates d'une pluralité de couples de valeurs candidates dans le domaine de couples de valeurs de commande admissibles, l'évaluation pour ce couple de valeurs candidates d'un critère énergétique correspondant à une somme des énergies qui seraient produites par chacun des accumulateurs électriques ajoutée à une valeur de consommation énergétique du moteur thermique, le couple de valeurs sélectionné étant celui associé à un minimum du critère énergétique.

Ainsi, on peut optimiser la consommation énergétique du véhicule automobile, en minimisant l'énergie produite par les accumulateurs électriques et par le moteur thermique.

Avantageusement et de manière non limitative, l'évaluation du critère énergétique peut être fonction, pour chaque accumulateur électrique, d'une valeur représentative de la puissance électrochimique de l'accumulateur électrique.

Avantageusement et de manière non limitative, l'évaluation du critère énergétique peut être fonction, d'une valeur représentative du débit de carburant fourni au moteur thermique.

Ainsi, on peut tenir compte, en temps réel du fonctionnement du moteur thermique, en recevant une valeur du débit de carburant du moteur, et/ou de l'énergie produite par les accumulateurs électrique, ce qui permet une gestion relativement précise de la consommation énergétique du véhicule automobile.

Avantageusement et de manière non limitative, l'évaluation du critère énergétique peut être fonction, pour chacun des deux accumulateurs électriques, d'un coefficient de pondération adapté pour maintenir ledit accumulateur électrique à un état d'énergie cible, par exemple une état d'énergie relatif à un état chargé de l'accumulateur électrique, ou un état d'énergie compris en 50% et 95% de la charge de l'accumulateur électrique.

Autrement dit, les coefficients de pondération peuvent permettre de favoriser le fonctionnement des accumulateurs électriques lorsque ceux-ci présentent un état d'énergie supérieur à l'état d'énergie cible, et, au contraire, de diminuer leur utilisation ou de les recharger, lorsque leur état d'énergie est inférieur à l'état d'énergie cible.

Ainsi, on peut optimiser la gestion énergétique du véhicule automobile, tout en assurant un niveau de charge optimal des accumulateurs électriques, ce qui permet, notamment, d'augmenter la durée de fonctionnement optimal des accumulateurs électriques.

Avantageusement et de manière non limitative, pour au moins un accumulateur électrique, le coefficient de pondération peut être obtenu par la mise en œuvre d'un régulateur de type proportionnel intégral.

Ainsi, on peut obtenir une régulation relativement stable et rapide de l'utilisation des accumulateurs électrique.

Alternativement, pour au moins un accumulateur électrique, le coefficient de pondération peut être obtenu par la mise en œuvre d'un régulateur de type proportionnel, proportionnel intégral dérivé, ou tout autre type de régulateur connu.

Avantageusement et de manière non limitative, les moyens de régulation peuvent comprendre un onduleur et un convertisseur DC-DC, aussi appelé hacheur, par exemple un hacheur dévolteur, un hacheur survolteur, un hacheur réversible ou non, ou tout type de hacheur adapté, le couple de valeurs de commande correspondant à une valeur de puissance de l'onduleur et une valeur de puissance du convertisseur DC-DC.

Autrement dit, on commande la gestion des accumulateurs électriques avec un convertisseur DC-DC et un onduleur. Ainsi on peut obtenir une architecture de gestion relativement peu coûteuse et relativement fiable.

En particulier, l'onduleur peut convertir la tension continue fournie par les deux accumulateurs électriques en une tension alternative adaptée pour alimenter la machine électrique.

En particulier, le convertisseur DC-DC peut assurer une tension continue de 14V aux bornes du réseau électrique de bord.

Avantageusement, le fonctionnement conjoint du convertisseur DC-DC et de l'onduleur peut permettre de gérer la charge et/ou la décharge, les tensions aux bornes et/ou les courants des accumulateurs électriques.

Avantageusement et de manière non limitative, l'étape de sélection peut être précédée d'une étape de présélection dans le domaine de couples de valeurs admissibles, d'une pluralité de couples de valeurs candidates, la sélection étant effectuée parmi la pluralité de couples de valeurs candidates.

Avantageusement et de manière non limitative, l'étape de présélection peut comprendre la présélection, ou le choix, d'une pluralité de couples de valeurs de commande espacés de manière sensiblement régulière dans le domaine de couples de valeurs admissible.

Ainsi, on peut obtenir par un procédé relativement simple à mettre en œuvre et rapide un ensemble de couples de valeurs candidates.

Alternativement, l'étape de présélection peut comprendre une présélection aléatoire, semi-aléatoire, ou une présélection de valeurs limites du domaine de couples de valeurs admissibles, ou tout autre procédé de sélection de valeurs dans un domaine établi.

Avantageusement et de manière non limitative, un accumulateur électrique parmi les deux accumulateurs électriques peut comprendre un pack de supercondensateurs et l'autre accumulateur électrique peut comprendre une batterie électrique.

En particulier, les deux accumulateurs électriques peuvent délivrer une tension continue.

En particulier, la batterie électrique peut correspondre à l'accumulateur fournissant une tension de référence au réseau électrique de bord, par exemple le réseau électrique de bord peut être connecté aux bornes de la batterie électrique, par exemple la batterie électrique peut présenter une tension nominale de sensiblement 14V.

Le pack de supercondensateurs peut être mis en série avec la batterie électrique de manière à fournir une haute tension à l'onduleur, de manière à alimenter la machine électrique.

L'invention se rapporte aussi à un dispositif de gestion de l'énergie d'un véhicule automobile hybride entraîné par une machine électrique et un moteur thermique, le véhicule automobile comprenant un réseau électrique de bord, un ensemble d'alimentation électrique adapté pour alimenter le réseau électrique de bord et la machine électrique, l'ensemble d'alimentation comprenant deux accumulateurs électriques en série et des moyens de régulation pour réguler, pour chaque accumulateur parmi les deux accumulateurs électriques, une valeur de puissance fournie, le dispositif de gestion comprenant :

- des moyens de réception, par exemple une patte d'un microprocesseur, un bus de communication, un port, par exemple un port série, un port parallèle ou tout autre moyen de réception adapté, pour recevoir au moins un paramètre de fonctionnement de l'ensemble d'alimentation électrique, par exemple un paramètre relatif au fonctionnement des moyens de régulation, par exemple une valeur de tension, de courant ou de puissance, ou tout autre type de paramètre adapté ;
- des moyens de détermination pour déterminer un domaine de couples de valeurs admissibles de commande des moyens de régulation, en fonction dudit au moins un paramètre de fonctionnement de l'ensemble d'alimentation électrique ;
- des moyens de sélection pour sélectionner dans le domaine de couples de valeurs admissibles de commande, un couple de valeurs de commande correspondant à un minimum de consommation électrique et du moteur thermique du véhicule automobile ;
- des moyens de transmission, par exemple une patte d'un microprocesseur, un bus de communication, un port, par exemple un port série, un port parallèle ou tout autre moyen de transmission adapté, pour transmettre vers les moyens de régulation des signaux de commande élaborés à partir du couple de valeurs de commande sélectionné.

Ainsi on peut réguler les accumulateurs électriques de manière relativement optimisée, par exemple des valeurs de tension, de courant ou de puissance, ou autre.

Les moyens de détermination peuvent comprendre une mémoire, par exemple une mémoire vive, un mémoire flash ou tout autre type de mémoire adapté pour stocker, au moins provisoirement, la pluralité de couples de valeurs candidates présélectionnées, et/ou des moyens de traitement de type cœur de processeur.

Les moyens de sélection peuvent comprendre des moyens de traitement, par exemple un cœur de processeur, ou autre, et éventuellement une mémoire.

Les moyens de sélection et les moyens de détermination peuvent être intégrés en un seul processeur, ou non.

Le dispositif de gestion peut ainsi comprendre, ou être intégré dans, un ou plusieurs processeur(s), par exemple un microprocesseur, un DSP (de l'anglais « Digital Signal Processor »), un microcontrôleur, ou autre.

Avantageusement et de manière non limitative, le dispositif peut comprendre des moyens de présélection pour présélectionner dans le domaine de couples de valeurs admissibles, une pluralité de couples de valeurs candidates.

Par exemple, les moyens de présélection peuvent comprendre un des moyens de traitement de type cœur de processeur ou autre.

Les moyens de présélection peuvent comprendre une mémoire, par exemple une mémoire vive, un mémoire flash ou tout autre type de mémoire adapté pour stocker, au moins provisoirement, la pluralité de couples de valeurs candidates présélectionnées.

L'invention se rapporte aussi à un véhicule automobile comprenant un dispositif de gestion de l'énergie tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la figure 1 est une vue schématique d'un dispositif de gestion de l'énergie d'un véhicule automobile hybride selon un mode de réalisation de l'invention ;
- la figure 2 est un graphique présentant un domaine de couples obtenu à l'étape de détermination d'un domaine de couples de valeurs admissibles de commande des moyens de régulation du procédé de gestion de l'énergie d'un véhicule automobile hybride selon un mode de réalisation de l'invention ;
- la figure 3 est un graphique représentant une étape de présélection dans le domaine de couples de valeurs admissibles selon la figure 2 ;
- la figure 4 est un organigramme du procédé de gestion selon un mode de réalisation de l'invention.

Un véhicule automobile hybride, non représenté, comprend une machine électrique 2 et un moteur thermique, non représenté, pour le propulser.

Le véhicule automobile comprend aussi un réseau électrique de bord 3, alimentant notamment des dispositifs de sécurité et de contrôle, par exemple les calculateurs des dispositifs d'aide au freinage et de contrôle de trajectoire du véhicule automobile.

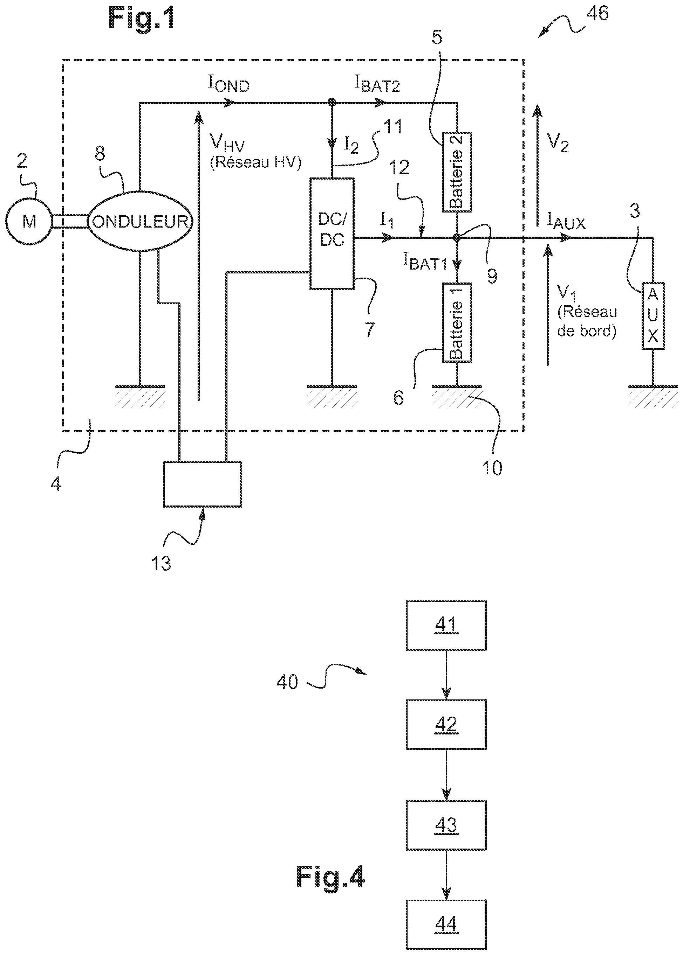

En référence à la figure 1, la machine électrique 2 et le réseau électrique de bord 3 sont alimentés par un ensemble d'alimentation électrique 4, comprenant deux accumulateurs électriques 5,6 montés en série, ici un pack de supercondensateurs 5 et une batterie 6, et des moyens de régulation 7, 8 adaptés pour réguler le fonctionnement des deux accumulateurs électriques 5,6.

Le réseau électrique de bord 3 est connecté aux bornes de la batterie 6.

Les moyens de régulation 7, 8 comprennent ici un convertisseur DC-DC 7, aussi connu sous le nom de hacheur 7, et un onduleur 8.

Le convertisseur DC-DC 7 est monté de manière à être connecté à chacune des bornes des deux accumulateurs électriques 5, 6 et permet de réguler les courants et les tensions aux bornes de chacun des accumulateurs électrique 5, 6. Le convertisseur DC-DC 7 est ici un convertisseur capable de fonctionner en mode survolteur, aussi appelé mode boost, et en mode dévolteur, aussi appelé mode buck.

En particulier, le convertisseur DC-DC 7 reçoit, entre une borne d'entrée 11 et la masse 10, une tension $V_{HV}$ correspondant à la somme des tensions $V_1$ et $V_2$ respectivement de la batterie 6 et du supercondensateur 5 et assure entre une borne de sortie 12 et la masse, une tension respectant des contraintes de fonctionnement, par exemple des bornes minimales et maximales de tension à ne pas dépasser pour le réseau de bord, par exemple des tensions comprises entre 10V et 20V, avantageusement entre 13V et 15V.

La borne de sortie 12 du convertisseur DC-DC 7 est connectée à un nœud 9 où se rejoignent une borne de la batterie 6, l'autre borne étant à la masse 6, et la borne d'alimentation du réseau électrique de bord 3, le convertisseur DC-DC assure de cette manière une tension respectant des contraintes de fonctionnement, par exemple des bornes minimales et maximales de tension à ne pas dépasser pour le réseau de bord, par exemple des tensions comprises entre 10V et 20V, avantageusement entre 13V et 15V, aux bornes du réseau électrique de bord 3.

L'onduleur 8 est connecté d'une part aux bornes des deux accumulateurs électriques 5,6, et d'autre part à la machine électrique 2, de manière à convertir, la tension continue fournie par les deux accumulateurs électriques 5,6 en série en une tension alternative pour alimenter la machine électrique 2 ; et/ou pour convertir, de manière inverse, lors d'un fonctionnement en récupération d'énergie, une tension alternative fournie par la machine électrique 2 en une tension continue pour recharger les accumulateurs électriques 1,6 en série.

Le fonctionnement conjoint de l'onduleur 8 et du convertisseur DC-DC 7, permet de réguler la charge et la décharge des accumulateurs électrique 5,6.

L'onduleur 8 et le convertisseur DC-DC 7 sont, dans ce mode de réalisation, commandés en tension par un dispositif de gestion 13.

Le dispositif de gestion 13 comprend un microprocesseur et au moins une mémoire de stockage, par exemple une mémoire morte et/ou une mémoire flash pour stocker des instructions et/ou une mémoire vive, pour par exemple stocker des résultats d'évaluation intermédiaire.

Le dispositif de gestion 13 comprend des moyens de réception de valeurs relatives aux accumulateurs 5,6, ici des valeurs de tension, de courant, et/ou de puissance, des valeurs de charge, par exemple une valeur représentative de l'état d'énergie des accumulateurs 5,6, par exemples des états de charge, de décharge, et/ou une valeur de puissance électrochimique pour déterminer la puissance produite par chacun des accumulateurs 5,6.

Le dispositif de gestion 13 comprend aussi des moyens de réception et de transmission de valeurs à l'onduleur 8, pour la réception et la commande d'une valeur de puissance de fonctionnement de l'onduleur 8.

Le dispositif de gestion 13 comprend aussi des moyens de réception et de transmission de valeurs du convertisseur DC-DC 7, pour la réception et la commande d'une valeur de puissance de fonctionnement du convertisseur DC-DC 7.

De manière alternative, l'onduleur 8 et le convertisseur DC-DC 7 peuvent être commandés en courant ou en tension par le dispositif de gestion 13.

En référence à la figure 4, le dispositif de gestion 13 comprend un microprocesseur mettant en œuvre un procédé de gestion de l'énergie du véhicule automobile.

Les instructions relatives à l'exécution du procédé par le microprocesseur sont stockées dans une mémoire de masse, par exemple une mémoire morte, une mémoire flash, ou tout autre type de mémoire adaptée du dispositif de gestion 13.

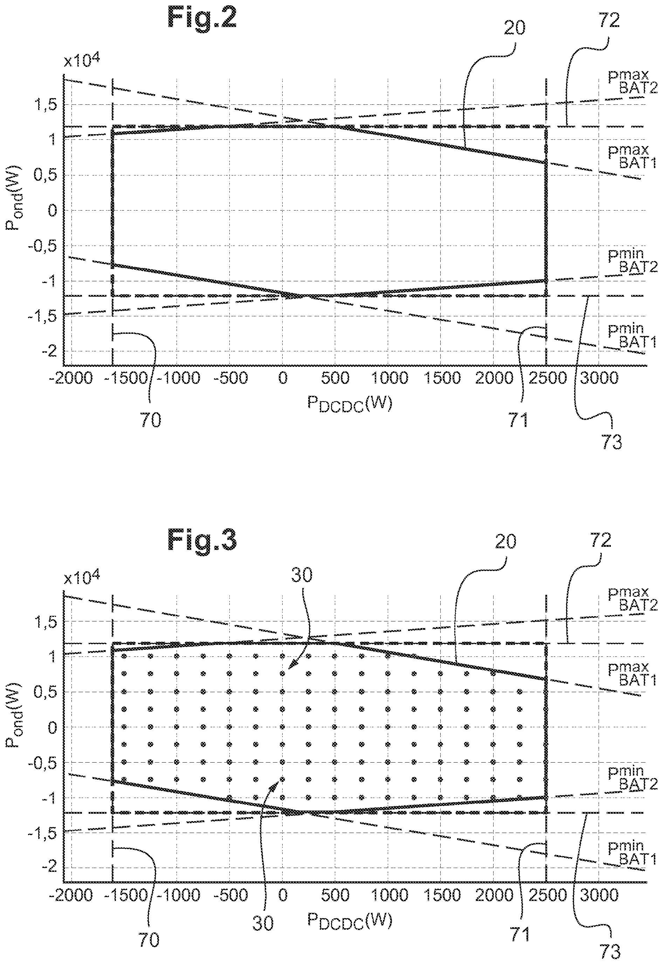

Dans une première étape 41 du procédé 40, en référence à la figure 2, on détermine un domaine de couples de valeurs admissibles de commande des moyens de régulation 7,8. Ici, on détermine un domaine de couples de valeurs pour commander d'une part l'onduleur 8 et d'autre par le convertisseur DC-DC 7, par des commandes en puissance, admissibles.

Autrement dit, chaque couple de valeurs admissibles de commande comprend une valeur de puissance de commande de l'onduleur 8 et une valeur de puissance de commande du convertisseur DC-DC 7.

Le domaine de couples de valeurs admissibles définit des limites hautes et basses de puissance de commande du convertisseur DC-DC 7 et de l'onduleur 8, afin d'assurer le bon fonctionnement des accumulateurs électriques 5,6, de l'ensemble d'alimentation 7,8 de la machine électrique 2 et du réseau électrique de bord 3.

En particulier, le domaine vise à maintenir les deux accumulateurs électriques 5,6 à un état d'énergie, ou SoE, adapté à leur bon fonctionnement.

Le domaine de couples de valeurs admissibles correspond ici à l'ensemble des couples de valeurs respectant le système d'inégalités suivant :

$$\max\left(\underline{y}, \underline{z} - \alpha x, \underline{w} - \beta x\right) \leq y \leq \min(\overline{y}, \overline{z} - \alpha x, \overline{w} - \beta x) \ (1)$$

$$\max\left(\underline{x}, \frac{\underline{w} - \overline{y}}{\beta}, \frac{\overline{z} - \underline{y}}{\alpha}, \frac{\underline{w} - \overline{z}}{\beta - \alpha}\right) \leq x \leq \min\left(\overline{x}, \frac{\overline{w} - \underline{y}}{\beta}, \frac{\underline{z} - \overline{y}}{\alpha}, \frac{\underline{z} - \overline{w}}{\alpha - \beta}\right) (2)$$

dans lequel :

- x correspond à une valeur de puissance de commande de l'onduleur 8 (aussi référencé $P_{OND}$ dans les figures 2 et 3);
- y correspond à une valeur de puissance de commande du convertisseur DC-DC 7 (aussi référencé $P_{DCDC}$ dans les figures 2 et 3);

et:

$$w = (P_{BAT1} + P_{AUX})\frac{V_{HV}}{V_1} \ (3)$$

$$z = \frac{P_{BAT2}}{V_2}V_{HV} \ (4)$$

$$\alpha = -\frac{1}{\eta} \quad (5)$$

$$\beta = \left(\frac{V_{HV}}{V_1} - \frac{1}{\eta}\right) \quad (6)$$

dans lequel :

- $P_{BAT1}$ correspond à la puissance de la batterie 6 ;
- $P_{BAT2}$ correspond à la puissance du supercondensateur 5 ;
- $P_{AUX}$ correspond à la puissance du circuit de bord 3 ;
- $V_{HV}$ correspond à la tension aux bornes de deux accumulateurs 5,6 en série ;
- $V_1$ correspond à la tension aux bornes de la batterie 6 ;
- $V_2$ correspond à la tension aux bornes du supercondensateur 5 ;
- $\eta$ correspond au rendement du convertisseur DC-DC 7

$\alpha$ et $\beta$ correspondent ici au fonctionnement du convertisseur DC-DC 7 en mode buck.

Lorsqu'on évalue les limites du domaine de commande pour un fonctionnement du DCDC en mode boost (y<0), le rendement doit être inversé dans (5) et (6).

Cette étape consiste à modéliser le système sur sa plage de fonctionnement admissible. Mais ce n'est pas l'étape qui dicte si la commande effective qui sera envoyée au DCDC sera en mode buck ou boost. La décision effective d'utiliser le DCDC en mode boost ou buck sera prise dans une étape ultérieure, en fonction du cas où la commande qui minimise le critère énergétique est une commande buck ou boost.

En revanche, lorsque l'on calcul les limites du système pour $P_{DCDC}$ >0 (voir figure 2) (y>0 dans les équations(1) et (2)) on utilise le rendement du DCDC en mode buck dans les équations (5) et (6), alors que lorsque l'on évalue les limites du système pour $P_{DCDC}$<0, il faut prendre $1/\eta$ dans les équations (5) et (6).

Toutes les inconnues comprenant une barre inférieure indiquent qu'il s'agit d'une valeur définie minimale relative à l'inconnue à ne pas franchir (par exemple $\underline{x}$ indique une valeur minimale définie de puissance de commande de l'onduleur, en deçà de laquelle l'onduleur 8 ne peut correctement fonctionner, et les inconnues comprenant une barre supérieure indiquent qu'il s'agit d'une valeur définie maximale relative à l'inconnue à ne pas dépasser (par exemple, $\overline{y}$ correspond à une valeur maximale de la commande du convertisseur DC-DC 7 à ne pas dépasser).

On obtient alors, en référence à la figure 2, un domaine de couples de valeurs admissibles 20.

Le domaine de couples de valeurs admissibles 20 correspond à des couples de valeurs de commande en puissance de l'onduleur 8 et du convertisseur DC-DC 7, comprises entre des valeurs de puissances maximales 71 et minimales 70 du convertisseur DC-DC 7 en abscisse, et des valeurs de puissances maximales 72 et minimales 73 de l'onduleur 8 en ordonnée, et entre des valeurs maximales $P_{MaxBAT2}$, $P_{MaxBAT1}$ et minimales $P_{MinBAT2}$, $P_{MinBAT1}$ de puissances pour chacun des accumulateurs électriques 5,6.

Ensuite, on effectue une étape de présélection 42 dans le domaine de couples de valeurs admissibles 20, une pluralité 30 de couples de valeurs candidates.

Ici, en référence à la figure 3, lors de l'étape de présélection 42, on présélectionne la pluralité 30 de couples de valeurs candidates en prenant, dans l'espace bidimensionnel du domaine de couples de valeurs admissibles 20, des couples de valeurs régulièrement espacées, par exemple en figure 3, selon un écart de 250W pour la valeur de commande en puissance du convertisseur DC-DC, et de 0.25W pour la valeur de commande en puissance de l'onduleur. Cependant le pas de valeurs pourra être librement adapté par l'homme du métier, en particulier en fonction des dimensions du domaine de couples de valeurs admissibles.

Pour chaque couple de valeurs candidates de la pluralité 30 de couples de valeurs candidates, au cours d'une étape de sélection 43, on évalue un critère énergétique H, appelé Hamiltonien dans la théorie de la commande optimale, de manière à déterminer quelle valeur candidate retourne la plus petite valeur de critère énergétique.

Autrement dit, le couple de valeurs candidate retournant la plus petite valeur de critère énergétique, correspond au couple de valeurs optimales pour commander les moyens de régulation 7,8, ici l'onduleur 8 et le convertisseur DC-DC 7.

Le couple de valeurs optimales minimise la consommation énergétique du véhicule automobile, tout en assurant le bon fonctionnement de la machine électrique et du réseau de bord, par rapport au besoin du véhicule automobile à un instant t donné.

Ici, on évalue la fonction Hamiltonienne suivante :

$$H(u, s, x, t) = \dot{m}_{carb}(u_1, t).PCI + s_1(t).P_{ech1}(u, x_1, t) + s_2(t).P_{ech2}(u, x_2, t)$$

Dans laquelle :

- $u = \begin{Bmatrix} u_1 \\ u_2 \end{Bmatrix} = \begin{Bmatrix} P_{ond} \\ P_{DCDC} \end{Bmatrix}$, un couple de valeurs candidates dans lequel :

  ○ $u_1$ correspond à la valeur de commande en puissance $P_{ond}$ de l'onduleur 8 ;
  ○ $u_2$ correspond à la valeur de commande en puissance $P_{DCDC}$ du convertisseur DC-DC 7 ;

- $\dot{m}_{carb}(u_1,t)$ correspond au débit de carburant en g/s consommé par le moteur ;
- PCI correspond à une valeur de pouvoir calorifique inférieur du carburant considéré, en J/g, qui permet de convertir un débit carburant en puissance équivalente en W ;
- $P_{ech1}$ et $P_{ech2}$ correspondent aux puissances électrochimiques des accumulateurs électriques pour respectivement la batterie 6 et le supercondensateur 5, qu'on peut évaluer ainsi :

$$P_{ech} = OCV_{ACC}.I_{ACC} = V_{ACC}.I_{ACC} + R_{ACC}.I_{ACC}^2$$

- Avec $x = \begin{Bmatrix} x_1 \\ x_2 \end{Bmatrix} = \begin{Bmatrix} SoE_{BAT1} \\ SoE_{BAT2} \end{Bmatrix}$ correspondant à l'état d'énergie des accumulateurs, respectivement de haut en bas pour la batterie 6 et le supercondensateur 5 ;

- $s = \begin{Bmatrix} s_1 \\ s_2 \end{Bmatrix}$, avec s1(t) et s2(t) correspondant à des coefficients de régulation de l'état d'énergie de chacun des accumulateurs autour d'une valeur d'état d'énergie cible $SoE_{cible}$, qui peut être différente pour chaque accumulateur 5,6, afin d'assurer le maintien de charge propre au véhicule hybride aussi connu sous le terme anglo-saxon de « charge sustaining ».
- On sélectionne le couple de valeurs candidates $u_{opt}$ minimisant cette fonction H, qui correspond donc au couple de valeurs de commande optimales, ce qu'on peut effectuer par la formule suivante :

$$u_{opt}(t) = argmin(H(u, s, x, t))$$

De cette manière, on peut sélectionner dans le domaine de couples de valeurs admissibles, le couple de valeurs de commande optimales $u_{opt}$ permettant d'optimiser la consommation énergétique du véhicule automobile tout en étant assuré que ce couple de valeur est dans le domaine de couples de valeur admissibles.

De cette manière on peut obtenir un couple de valeurs de commande optimales tout en assurant un bon fonctionnement de l'ensemble d'alimentation électrique 4 du véhicule automobile.

Les coefficients de régulation de l'état d'énergie des accumulateurs $s_1(t)$ et $s_2(t)$, sont régulés par la mise en œuvre d'un régulateur proportionnel intégral, de manière à faire tendre, à chaque instant, l'état d'énergie de chacun des accumulateurs (5,6) vers un état d'énergie cible $SoE_{cible}$.

Le régulateur proportionnel intégral, bien connu de l'homme du métier, peut être obtenu par les formules suivantes :

$$s_1(t) = s_0^1 + K_p^1 \left( SoE_{cible}^1 - SoE_{BAT1}(t) \right) + K_i^1 . \int_0^t \left( SoE_{cible}^1 - SoE_{BAT1}(t) \right).dt$$

$$s_2(t) = s_0^2 + K_p^2 \left( SoE_{cible}^2 - SoE_{BAT2}(t) \right) + K_i^2 . \int_0^t \left( SoE_{cible}^2 - SoE_{BAT2}(t) \right).dt$$

dans lesquelles :

- Kp et Ki correspondent aux gains proportionnel et intégral du régulateur proportionnel intégral. La définition de tels gains est une chose bien connue de l'homme du métier ;

- $s_0$ correspond, pour chaque accumulateur, au feed-forward, aussi connu en français sous le nom d'action anticipée, du régulateur ; et
- $(SoE_{cible} - SoE_{BAT}(t))$ pour chaque accumulateur 5,6, correspond à l'erreur entre l'état d'énergie désiré et l'état d'énergie courant, que le régulateur cherche à réduire.

Chaque valeur du couple de valeurs de commande optimale $u_{opt}$, est alors transmise, au cours d'une étape de transmission 44, d'une part à l'onduleur 8 et d'autre part au convertisseur DC-DC 7 pour les commander en puissance, ici par un moyen de transmission connecté au microprocesseur, par exemple un bus de communication, une patte du microprocesseur, ou tout autre moyen de transmission adapté.

Ainsi, on peut gérer de manière relativement efficace les accumulateurs électriques (5,6) en série d'un véhicule automobile hybride, lorsque les accumulateurs électriques (5,6) alimentent simultanément une machine électrique (2) de motorisation du véhicule et le réseau électrique de bord (3) du véhicule automobile.

## Revendications

1. Procédé (40) de gestion de l'énergie d'un véhicule automobile hybride entrainé par une machine électrique (2) et un moteur thermique, le véhicule automobile comprenant un réseau électrique de bord (3), un ensemble d'alimentation électrique (4) adapté pour alimenter le réseau électrique de bord (3) et la machine électrique (2), l'ensemble d'alimentation comprenant deux accumulateurs électriques (5,6) en série et des moyens de régulation (7,8) pour réguler, pour chaque accumulateur (5,6) parmi les deux accumulateurs électriques (5,6), une valeur de puissance fournie ou reçue,
le procédé comprenant des étapes consistant à :

   - déterminer (41) un domaine (20) de couples de valeurs admissibles de commande des moyens de régulation (7,8), en fonction d'au moins un paramètre de fonctionnement de l'ensemble d'alimentation électrique (4),
   - sélectionner (43) dans le domaine (20) de couples de valeurs admissibles de commande, un couple de valeurs de commande correspondant à un minimum de consommation électrique et du moteur thermique du véhicule automobile, et
   - transmettre vers les moyens de régulation (7,8) des signaux de commande élaborés à partir du couple de valeurs de commande sélectionné.

2. Procédé (40) selon la revendication 1, **caractérisé en ce que** l'étape de sélection (43) comprend, pour chaque couple de valeurs candidates d'une pluralité de couples de valeurs candidates dans le domaine de couples de valeurs de commande admissibles, l'évaluation pour ce couple de valeurs candidates d'un critère énergétique correspondant à une somme des énergies produites par chacun des accumulateurs électriques (5,6) ajoutée à une valeur de consommation énergétique du moteur thermique, le couple de valeurs optimales sélectionné étant celui associé à un minimum du critère énergétique.

3. Procédé (40) selon la revendication 2, **caractérisé en ce que** l'évaluation du critère énergétique est fonction, pour chaque accumulateur électrique (5,6), d'une valeur représentative d'une valeur de puissance électrochimique.

4. Procédé (40) selon l'une quelconque des revendications 2 ou 3, **caractérisé en ce que** l'évaluation du critère énergétique est fonction d'une valeur représentative du débit de carburant fourni au moteur thermique.

5. Procédé (40) selon l'une quelconque des revendications 2 à 4, **caractérisé en ce que** l'évaluation du critère énergétique est fonction, pour chacun des deux accumulateurs électriques (5,6), d'un coefficient de pondération adapté pour maintenir ledit accumulateur électrique (5,6) à un état d'énergie cible.

6. Procédé (40) selon la revendication 5, **caractérisé en ce que** pour au moins un accumulateur électrique (5,6), le coefficient de pondération est obtenu par la mise en œuvre d'un régulateur de type proportionnel intégral.

7. Procédé (40) selon l'une quelconque des revendications 1 à 6, **caractérisé en ce que** les moyens de régulation (7,8) comprennent un onduleur (8) et un convertisseur DC-DC (7), le couple de valeurs de commande correspondant à une valeur de puissance de l'onduleur (8) et une valeur de puissance du convertisseur DC-DC (7).

8. Procédé (40) selon l'une quelconque des revendications 1 à 7, **caractérisé en ce qu'**un accumulateur électrique (5,6) parmi les deux accumulateurs électriques (5,6) comprend un pack de supercondensateurs et l'autre accumulateur électrique (5,6) comprend une batterie électrique.

9. Dispositif (46) de gestion de l'énergie d'un véhicule automobile hybride entrainé par une machine électrique (2) et un moteur thermique,
le véhicule automobile comprenant un réseau électrique de bord (3), un ensemble d'alimentation électrique (4) adapté pour alimenter le réseau électrique de bord (3) et la machine électrique (2), l'ensemble d'alimentation comprenant deux accumulateurs électriques (5,6) en série et des moyens de régulation (7,8) pour réguler, pour chaque accumulateur (5,6) parmi les deux accumulateurs électriques (5,6), une valeur de puissance fournie,
le dispositif de gestion comprenant :

- des moyens de réception pour recevoir au moins un paramètre de fonctionnement de l'ensemble d'alimentation électrique (4),
- des moyens de détermination pour déterminer (41) un domaine (20) de couples de valeurs admissibles de commande des moyens de régulation (7,8), en fonction dudit au moins un paramètre de fonctionnement de l'ensemble d'alimentation électrique (4),
- des moyens de sélection pour sélectionner (43) dans le domaine (20) de couples de valeurs admissibles de commande, un couple de valeurs de commande correspondant à un minimum de consommation électrique et du moteur thermique du véhicule automobile,
- des moyens de transmission pour transmettre vers les moyens de régulation (7,8) des signaux de commande élaborés à partir du couple de valeurs de commande sélectionné.

10. Véhicule automobile hybride comprenant un dispositif de gestion selon la revendication 9.

**Patentansprüche**

1. Verfahren (40) zur Verwaltung der Energie eines Hybridkraftfahrzeugs, das von einer elektrischen Maschine (2) und einem Verbrennungsmotor angetrieben wird, wobei das Kraftfahrzeug ein elektrisches Bordnetz (3), eine Stromversorgungsanordnung (4), die geeignet ist, das elektrische Bordnetz (3) und die elektrische Maschine (2) zu versorgen, umfasst, wobei die Versorgungsanordnung zwei Stromspeicher (5, 6) in Reihe umfasst und Regelungsmittel (7, 8), um für jeden Speicher (5, 6) unter den beiden Stromspeichern (5, 6) einen abgegebenen oder empfangenen Leistungswert zu regeln,
wobei das Verfahren Schritte umfasst, die darin bestehen:

- einen Bereich (20) zulässiger Steuerungswertepaare der Regelungsmittel (7, 8) in Abhängigkeit von mindestens einem Betriebsparameter der Stromversorgungsanordnung (4) zu bestimmen (41),
- in dem Bereich (20) zulässiger Steuerungswertepaare ein Steuerungswertepaar auszuwählen (43), das einem Stromverbrauchsminimum und des Verbrennungsmotors des Kraftfahrzeugs entspricht, und
- zu den Regelungsmitteln (7, 8) Steuerungssignale zu übertragen, die ausgehend von dem ausgewählten Steuerungswertepaar erarbeitet werden.

2. Verfahren (40) nach Anspruch 1, **dadurch gekennzeichnet, dass** der Schritt des Auswählens (43) bei jedem Kandidatenwertepaar einer Vielzahl von Kandidatenwertepaaren in dem Bereich zulässiger Steuerungswertepaare die Bewertung, für dieses Kandidatenwertepaar, eines energetischen Kriteriums umfasst, das einer Summe der von jedem der Stromspeicher (5, 6) erzeugten Energien entspricht, die zu einem Energieverbrauchswert des Verbrennungsmotors addiert wird, wobei das ausgewählte Paar optimaler Werte dasjenige ist, das einem Minimum des energetischen Kriteriums zugeordnet ist.

3. Verfahren (40) nach Anspruch 2, **dadurch gekennzeichnet, dass** die Bewertung des energetischen Kriteriums bei jedem Stromspeicher (5, 6) von einem Wert abhängig ist, der für einen elektrochemischen Leistungswert repräsentativ ist.

4. Verfahren (40) nach einem der Ansprüche 2 oder 3, **dadurch gekennzeichnet, dass** die Bewertung des energetischen Kriteriums von einem Wert abhängig ist, der für die an den Verbrennungsmotor abgegebene Kraftstoffdurchflussmenge repräsentativ ist.

5. Verfahren (40) nach einem der Ansprüche 2 bis 4, **dadurch gekennzeichnet, dass** die Bewertung des energetischen Kriteriums bei jedem der beiden Stromspeicher (5, 6) von einem Gewichtungskoeffizienten abhängig ist, der geeignet ist, den Stromspeicher (5, 6) in einem Zielenergiezustand zu halten.

6. Verfahren (40) nach Anspruch 5, **dadurch gekennzeichnet, dass** bei mindestens einem Stromspeicher (5, 6) der Gewichtungskoeffizient durch den Einsatz eines Proportional-Integral-Reglers erhalten wird.

7. Verfahren (40) nach einem der Ansprüche 1 bis 6, **dadurch gekennzeichnet, dass** die Regelungsmittel (7, 8) einen Wechselrichter (8) und einen DC-DC-Wandler (7) umfassen, wobei das Steuerungswertepaar einem Leistungswert des Wechselrichters (8) und einem Leistungswert des DC-DC-Wandlers (7) entspricht.

8. Verfahren (40) nach einem der Ansprüche 1 bis 7, **dadurch gekennzeichnet, dass** ein Stromspeicher (5, 6) unter den beiden Stromspeichern (5, 6) ein Superkondensatorpack umfasst und der andere Stromspeicher (5, 6) eine elektrische Batterie umfasst.

9. Vorrichtung (46) zur Verwaltung der Energie eines Hybridkraftfahrzeugs, das von einer elektrischen Maschine (2) und einem Verbrennungsmotor angetrieben wird,
wobei das Kraftfahrzeug ein elektrisches Bordnetz (3), eine Stromversorgungsanordnung (4), die geeignet ist, das elektrische Bordnetz (3) und die elektrische Maschine (2) zu versorgen, umfasst, wobei die Versorgungsanordnung zwei Stromspeicher (5, 6) in Reihe umfasst und Regelungsmittel (7, 8), um für jeden Speicher (5, 6) unter den beiden Stromspeichern (5, 6) einen abgegebenen Leistungswert zu regeln,
wobei die Verwaltungsvorrichtung umfasst:

- Empfangseinrichtungen, um mindestens einen Betriebsparameter der Stromversorgungsanordnung (4) zu empfangen,
- Bestimmungseinrichtungen, um einen Bereich (20) zulässiger Steuerungswertepaare der Regelungsmittel (7, 8) in Abhängigkeit von dem mindestens einen Betriebsparameter der Stromversorgungsanordnung (4) zu bestimmen (41),
- Auswähleinrichtungen, um in dem Bereich (20) zulässiger Steuerungswertepaare ein Steuerungswertepaar auszuwählen (43), das einem Stromverbrauchsminimum und des Verbrennungsmotors des Kraftfahrzeugs entspricht,
- Übertragungseinrichtungen, um zu den Regelungsmitteln (7, 8) Steuerungssignale zu übertragen, die ausgehend von dem ausgewählten Steuerungswertepaar erarbeitet werden.

10. Hybridkraftfahrzeug mit einer Verwaltungsvorrichtung nach Anspruch 9.

**Claims**

1. Method (40) for managing energy in a hybrid motor vehicle driven by an electric machine (2) and a combustion engine, the motor vehicle comprising an onboard electrical network (3) and an electrical power supply assembly (4) suitable for supplying the onboard electrical network (3) and the electric machine (2) with power, the power supply assembly comprising two electrical accumulators (5, 6) in series and regulator means (7, 8) for regulating, for each accumulator (5, 6) of the two electrical accumulators (5, 6), a delivered or received power value,
the method comprising the steps consisting in:

- determining (41) a range (20) of pairs of admissible control values for the regulator means (7, 8) according to at least one operating parameter of the electrical power supply assembly (4);
- selecting (43), from the range (20) of pairs of admissible control values, a pair of control values corresponding to a minimum electricity consumption and of the combustion engine of the motor vehicle; and
- transmitting, to the regulator means (7, 8), control signals produced on the basis of the selected pair of control values.

2. Method (40) according to Claim 1, **characterized in that** the selection step (43) comprises, for each pair of candidate values of a plurality of pairs of candidate values in the range of pairs of admissible control values, evaluating, for this pair of candidate values, an energy criterion corresponding to a sum of the energies produced by each of the electrical accumulators (5, 6) added to an energy-consumption value of the combustion engine, the selected pair of optimum values being that associated with an energy-criterion minimum.

3. Method (40) according to Claim 2, **characterized in that** the evaluation of the energy criterion is dependent, for each electrical accumulator (5, 6), on a value that is representative of an electrochemical power value.

4. Method (40) according to either of Claims 2 and 3, **characterized in that** the evaluation of the energy criterion is dependent on a value that is representative of the flow rate of fuel delivered to the combustion engine.

5. Method (40) according to any one of Claims 2 to 4, **characterized in that** the evaluation of the energy criterion is dependent, for each of the two electrical accumulators (5, 6), on a weighting coefficient suitable for maintaining said electrical accumulator (5, 6) at a target energy state.

6. Method (40) according to Claim 5, **characterized in that**, for at least one electrical accumulator (5, 6), the weighting coefficient is obtained by using a proportional-integral controller.

7. Method (40) according to any one of Claims 1 to 6, **characterized in that** the regulator means (7, 8) comprise an inverter (8) and a DC-to-DC converter (7), the pair of control values corresponding to a power value of the inverter (8) and a power value of the DC-to-DC converter (7).

8. Method (40) according to any one of Claims 1 to 7, **characterized in that** one electrical accumulator (5, 6) of the two electrical accumulators (5, 6) comprises a supercapacitor pack and the other electrical accumulator (5, 6) comprises an electrical battery.

9. Device (46) for managing energy in a hybrid motor vehicle driven by an electric machine (2) and a combustion engine, the motor vehicle comprising an onboard electrical network (3) and an electrical power supply assembly (4) suitable for supplying the onboard electrical network (3) and the electric machine (2) with power, the power supply assembly comprising two electrical accumulators (5, 6) in series and regulator means (7, 8) for regulating, for each accumulator (5, 6) of the two electrical accumulators (5, 6), a delivered power value,
the management device comprising:

- receiver means for receiving at least one operating parameter of the electrical power supply assembly (4);
- determination means for determining (41) a range (20) of pairs of admissible control values for the regulator means (7, 8) according to said at least one operating parameter of the electrical power supply assembly (4);
- selection means for selecting (43), from the range (20) of pairs of admissible control values, a pair of control values corresponding to a minimum electricity consumption and of the combustion engine of the motor vehicle; and
- transmitter means for transmitting, to the regulator means (7, 8), control signals produced on the basis of the selected pair of control values.

10. Hybrid motor vehicle comprising a management device according to Claim 9.

# Fig.1

# Fig.4

Fig.2

Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2988674

- US 2004178756 A1